(19) Europäisches Patentamt
European Patent Office
Office européen des brevets

(11) **EP 2 615 491 A1**

(12) **EUROPEAN PATENT APPLICATION**
published in accordance with Art. 153(4) EPC

(43) Date of publication:
**17.07.2013 Bulletin 2013/29**

(51) Int Cl.:
*G02F 1/35* (2006.01)

(21) Application number: **11823496.2**

(22) Date of filing: **02.09.2011**

(86) International application number:
**PCT/JP2011/070044**

(87) International publication number:
**WO 2012/033021 (15.03.2012 Gazette 2012/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2010 JP 2010203367**

(71) Applicant: **The University of Tokushima Tokushima-shi Tokushima 770-8501 (JP)**

(72) Inventor: **MATSUO, Shigeki Tokushima-shi Tokushima 770-8506 (JP)**

(74) Representative: **Ludewigt, Christoph Patentanwälte Krah & Ludewigt Am Blasiwald 24 79183 Waldkirch (DE)**

(54) **LASER BEAM REGULATOR DEVICE, LASER BEAM ENERGY STABILIZATION DEVICE, LASER BEAM REGULATION METHOD, AND LASER BEAM ENERGY STABILIZATION METHOD**

(57) The present invention provides a laser beam control apparatus including: beam optical systems 33 and 34 for dividing a laser beam into a principal beam P and an auxiliary beam S and then for crossing the principal beam P and the auxiliary beam S; polarizing devices 36 and 37 for converting the laser beam before the division process into a linearly-polarized beam or converting the laser beams after the division process into linearly-polarized beams; a polarization direction change element 38 for changing the polarization direction of either one or both of the principal beam P and the auxiliary beam S; an optical gate element 35 provided at the intersection of the principal beam P and the auxiliary beam S and made of a material that exhibits the optical Kerr effect; and a polarization filter 39 for taking out from the principal beam P which has passed through the optical gate element 35 only a beam polarized in a predetermined direction.

Fig. 3

**Description**

TECHNICAL FIELD

The present invention relates to an apparatus and method for controlling the laser beam emitted from a light source. It specifically relates to the apparatus and method for stabilizing the energy of a laser beam.

BACKGROUND ART

Ultrashort pulse lasers are used for the observation of an ultra-short-time (or ultrafast) phenomenon whose duration is comparable to that of the ultrashort pulse and for other purposes. Observing a phenomenon on a molecular or atomic level in a substance occurring in a very short period of time requires an ultrashort pulse laser whose duration is of the order of femtoseconds. In order for such an ultrashort pulse laser to be properly used in such an observation or measurement, in addition to the requirement that the duration of the laser is short, the energy per a pulse of the generated pulse laser should be stable and constant. In recent years, ultrashort pulse lasers are also used for processing materials. Also in this case, the energy per a pulse is required to be stable and constant in order to ensure the uniformity of processing.

However, actually, it is difficult to generate a series of high-pulse-energy (e.g. 1 mJ/pulse) ultrashort laser pulses having stable and constant energy. In light of this, a variety of technologies have been developed for stabilizing the energy of generated laser pulses. One of such apparatuses is disclosed in Patent Document 1. In this apparatus, a part of laser light is reflected by a mirror placed on the optical path and monitored so as to feedback-control a power regulator provided on the optical path, thereby stabilizing the output.

Non-Patent Document 1 discloses an apparatus in which a Pockels cells is placed on the optical path of a laser light, and the transmittance of the Pockels cell is regulated by a photoconductive switch which is controlled by a monitor laser light taken out from the laser light so as to stabilize the intensity of the laser light.

BACKGROUND ART DOCUMENT

PATENT DOCUMENT

[Patent Document 1] JP-A 2006-303235
[Patent Document 2] US-A 5,828,484
[Patent Document 3] JP-A 2001-356095
[Patent Document 4] JP-A 2004-85930

NON-PATENT DOCUMENT

[Non-Patent Document 1] "STABBLER", [online], FASTLITE (France), Internet <http://www.fastlite.com/en/pag18-STABBLER.html>, [September 7, 2010]
[Non-Patent Document 2] Shigeki Matsuo and Tahei Tahara: "Phase-stabilized Optical Heterodyne Detection of Impulsive Stimulated Raman Scattering", Chemical Physics Letters, Vol. 264, No. 6, pp. 636-642, 1997
[Non-Patent Document 3] Naoki Sugimoto: "Photonics Glasses", Res. Reports Asahi Glass Co., Ltd., Vol. 57, pp. 75-81, 2007

DISCLOSURE OF THE INVENTION

PROBLEM TO BE SOLVED BY THE INVENTION

The apparatus of Patent Document 1 aims at increasing the long-term (e.g. an hour or a month) stability of the laser light intensity and it is not intended for eliminating the fluctuation of energy of plural pulses. Highly accurate measurement and processing using an ultrashort pulse laser require such a stabilization of the energy of each pulse. In addition, the apparatus of Patent Document 1 has a large power controller (power regulator), which complicates the apparatus and renders it expensive. The apparatus of Patent Document 1 involves an electronic control. This makes it difficult to coordinate the optical system and the electric system of the apparatus, and increases the size of the apparatus.

Moreover, it can handle pulses of pulse rate not higher than 5 kHz due to the time delay associated with the optical-electric conversion.

The problem to be solved by the present invention is to provide an apparatus capable of stabilizing the intensity of a laser light without using any electrical elements but simply by optical means.

MEANS FOR SOLVING THE PROBLEM

To solve the aforementioned problem, the first aspect of the present invention provides a laser beam control apparatus, including:

> a) a beam optical system for dividing a linearly-polarized incident laser beam into a principal beam and an auxiliary beam, and then for crossing the principal beam and the auxiliary beam;
> b) a polarization direction change element for changing the polarization direction of either one or both of the principal beam and the auxiliary beam;
> c) an optical gate element provided at an intersection of the principal beam and the auxiliary beam and made of a material that exhibits the optical Kerr effect; and
> d) a polarization filter for taking out from the principal beam which has passed through the optical gate element only a beam polarized in a predetermined direction.

To solve the aforementioned problem, the second aspect of the present invention provides a laser beam control apparatus, including:

> a) an incident beam convertor for converting an incident laser beam into a linearly-polarized beam;
> b) a beam optical system for dividing the incident laser beam which has been converted into a linearly-polarized beam into a principal beam and an auxiliary beam, and then for crossing the principal beam and the auxiliary beam;
> c) a polarization direction change element for changing the polarization direction of either one or both of the principal beam and the auxiliary beam;
> d) an optical gate element provided at an intersection of the principal beam and the auxiliary beam and made of a material that exhibits the optical Kerr effect; and
> e) a polarization filter for taking out from the principal beam which has passed through the optical gate element only a beam polarized in a predetermined direction.

To solve the aforementioned problem, the third aspect of the present invention provides a laser beam control apparatus, including:

> a) a beam optical system for dividing an incident laser beam into a principal beam and an auxiliary beam, and then for crossing the principal beam and the auxiliary beam;
> b) a linear polarizer for converting the principal beam and the auxiliary beam into a beam linearly polarized in a same direction;
> c) a polarization direction change element for changing the polarization direction of either one or both of the principal beam and the auxiliary beam;
> d) an optical gate element provided at an intersection of the principal beam and the auxiliary beam and made of a material that exhibits the optical Kerr effect; and
> e) a polarization filter for taking out from the principal beam which has passed through the optical gate element only a beam polarized in a predetermined direction.

In the case where the incident laser beam is linearly polarized, the laser beam control apparatus of the first aspect of the present invention can be used. In the case where the polarization direction of the incident laser beam is not specified, the laser beam control apparatus of the second or third aspect of the present invention may be used. In the second aspect of the present invention, the incident laser beam is converted into a linearly-polarized beam, and then the laser beam is divided into the principal beam and the auxiliary beam. In the third aspect of the present invention, the incident laser beam is divided into the principal beam and the auxiliary beam, and then these beams are converted into a beam linearly polarized in the same direction.

In the case where the incident beam is first divided into the principal beam and the auxiliary beam and then these beams are converted into linearly-polarized beams, as in the third aspect of the present invention, the laser beam control apparatus may include a polarization direction complex change element for converting both the principal beam and the auxiliary beam into a linearly-polarized beam so that their polarization directions differ by a predetermined angle, in place of providing independently the linear polarizer and the polarization direction change element. This laser beam control apparatus is the fourth aspect of the present invention. By using the polarization direction complex change element which introduces a predetermined difference between the polarization directions of the two beams in advance, the polarization direction change element is no more necessary.

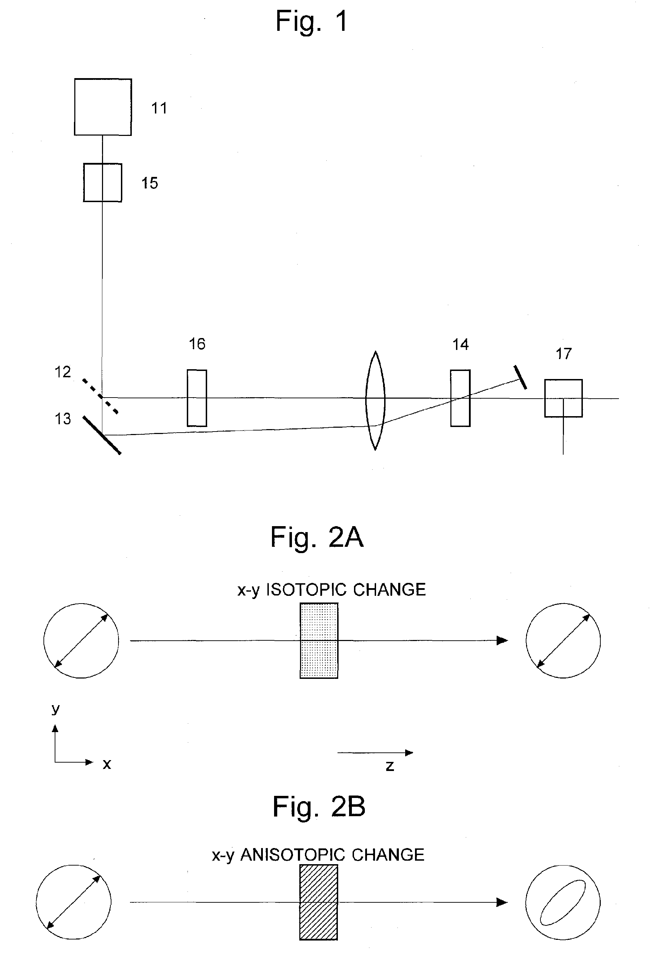

The principle of the laser beam control apparatus according to the present invention will now be described. Although it will be described with reference to Fig. 1 (which is an example of the second aspect of the present invention) for easy understanding, the configuration of the laser beam control apparatus according to the present invention is not limited to such a particular arrangement.

The laser beam generated in an optical source 11 is first divided into a principal beam P and an auxiliary beam S by a beam splitter 12. Then, the beams P and S are made to cross each other by a mirror 13 or the like. The beam splitter 12 and the mirror 13 or the like compose the beam optical system. The splitting ratio (intensity ratio) of the principal beam P and the auxiliary beam S is not necessarily limited to the case "the principal beam P > the auxiliary beam S": the ratio may be 50:50 or inversely "the principal beam P < the auxiliary beam S." An optical gate element 14 is placed at the crossing point of the beams P and S.

The incident laser beam is converted into a linearly-polarized beam in advance by a polarizer 15 and then divided into the principal beam P and the auxiliary beam S. (Therefore, both the principal beam P and the auxiliary beam S after the division are beams linearly polarized in the same direction.) The conversion of the incident beam may be performed after it is divided as previously described. If the incident beam is linearly-polarized, such a conversion unit is not required. After both the principal beam P and the auxiliary beam S have been converted into linearly-polarized beams, the polarization direction of either one or both of the principal beam P and the auxiliary beam S is changed by a polarization direction change element 16 so that their polarization directions differ by a predetermined angle. The term "polarization direction" is customarily defined as the direction of oscillation of the electric field of light (same in the present description). However, the definition is irrelevant to the principle and effect of the present invention, because the polarization direction change element 16 just changes the relative directions of the principal beam P and the auxiliary beam S.

Since the optical gate element 14 is made of a material that exhibits the optical Kerr effect, its refractive index in the direction of the electric field component (polarization direction) is changed by the auxiliary beam S in proportion to the square of the intensity of the electric field of the auxiliary beam S. If the optical gate element 14 remains unchanged or if the refractive index is isotropically changed, the principal beam P passes through the optical gate element 14 without any alteration of its polarization direction (Fig. 2A). In the case where the refractive index of the optical gate element 14 is changed by the auxiliary beam S only in the polarization direction of the auxiliary beam S, the principal beam P will be elliptically-polarized (Fig. 2B) because of the difference in the polarization direction between the principal beam P and the auxiliary beam S.

The intensities of the components in each direction in the x-y plane of the principal beam P which is no longer linearly-polarized but elliptically-polarized by passing through the optical gate element 14 depend on the degree of modulation, by the auxiliary beam S, of the optical gate element 14. That is, as the intensity of the auxiliary beam S increases, the refractive index in the polarization direction of the optical gate element 14 changes largely, thereby, the component of the principal beam P in the original direction (of the linearly-polarized beam) decreases and the component perpendicular to it increases. (However, the component in the original direction of the principal beam P does not monotonically decrease as the intensity of the auxiliary beam S increases; after reaching the minimum, it starts to increase again.)

As the principal beam P and the auxiliary beam S are consequences of the division of a beam, their intensities change simultaneously. Therefore, when the component in the predetermined direction of the principal beam P after passing through the optical gate element 14 is taken out by a polarization filter 17, the intensity change before passing through the optical gate element 14 is compensated by the modulation of the optical gate element 14. Therefore, it is possible to take out the principal beam P having stable intensity. By taking out the component in the other direction of the principal beam P after passing through the optical gate element 4, instead, it is possible to obtain a beam in which the intensity change is amplified. In any case, the apparatus according to the present invention can be used as a beam control apparatus. In the beam control apparatus of the present invention, a gate element 14 which exhibits the optical Kerr effect is used to control a beam by using a partial beam obtained by dividing the beam. One possible application of this apparatus is a beam energy stabilizing apparatus.

Materials having the optical Kerr effect have been used for a Kerr shutter in a time-resolved spectrometry (refer to Patent Documents 2 and 3, for example). In the apparatus according to the present invention, such materials are used as a beam control gate element for energy stabilization or other purposes. Materials having the optical Kerr effect include, for example, carbon disulfide, strontium titanate, dense flint glass (SFS1), and bismuth glass. Bismuth glass means a glass containing a bismuth oxide or oxides of 10% or more by weight, in addition to general materials composing glass such as $SiO_2$ and $B_2O_3$.

The laser beam control apparatuses of the aforementioned aspects of the present invention may be preferably used for a continuous laser beam and a pulsed laser beam in which the pulse duration is relatively long. In the case where the pulse duration is of the order of femtoseconds, the spatial relationship between the principal beam and the auxiliary beam should be taken into consideration. Given this factor, in the case where the laser beam control apparatuses of the aforementioned aspects of the present invention are used for an ultrashort pulse laser beam, it is preferable to set the beam optical system to divide a pulsed laser beam into a principal beam and an auxiliary beam, and then cross these beams at a point where their optical path lengths after the beam division are the same.

In this apparatus, the principal beam and the auxiliary beam have the same optical path lengths after the beam division. Therefore, they simultaneously arrive at the optical gate element, where the previously described effect takes place.

The laser beam control apparatus according to the present invention can be used for stabilizing the energy of a laser beam as previously described. This effect can be obtained also during the duration of a pulse. That is, the laser beam control apparatus according to the present invention can be used as a pulse waveform change apparatus for changing the temporal waveform of pulses. In this case, the optical gate element should be made of a material whose change in the refractive index caused by the incident light is significantly faster than the pulse width (pulse duration) of the incident light. The aforementioned materials, i.e. strontium titanate, dense flint glass (SFS1), and bismuth glass, may be preferably used for the optical gate element.

## EFFECTS OF THE INVENTION

The laser beam control apparatus according to the present invention is simply composed of an optical means without using any electrical means. Therefore, it can handle fast pulses of up to several GHz. In addition, since there is no need to regulate the relationship between the optical system and the electrical system, the apparatus can be manufactured at low cost.

## BRIEF DESCRIPTION OF THE DRAWINGS

Fig. 1 is a schematic configuration diagram of an apparatus for showing the principle of the present invention.
Figs. 2A and 2B are explanation diagrams showing changes of the polarization direction of a principal beam for illustrating the principle of the present invention.
Fig. 3 is a schematic configuration diagram of a femtosecond laser beam energy stabilizing apparatus of an embodiment of the present invention.
Fig. 4 shows a coordinate system for explaining a relationship between the principal beam and the auxiliary beam in an optical gate element.
Fig. 5 is a graph showing a change in the intensity of the principal beam before passing through the optical gate element in relation to the intensity of the perpendicular component light which has been separated from the principal beam after passing through the optical gate element.
Fig.6 is a graph for comparing a change in the intensities of 100 shots of femtosecond laser pulses between the case where the apparatus of the present embodiment is used and the case where a conventional apparatus is used.
Fig. 7 is a schematic configuration diagram of another practical example of the present invention.
Fig. 8 is a schematic configuration diagram of an apparatus using a transient grating method of still another practical example of the present invention.
Fig. 9 is an explanation diagram showing a change of the optical gate element in the apparatus using a transient grating method.
Fig. 10 is a schematic configuration diagram of an embodiment in which a polarization direction complex change element is used.
Fig. 11 shows a temporal waveform of a pulse of the principal beam before passing through the optical gate element and that of the pulse of the principal beam after passing through the optical gate element.

## BEST MODES FOR CARRYING OUT THE INVENTION

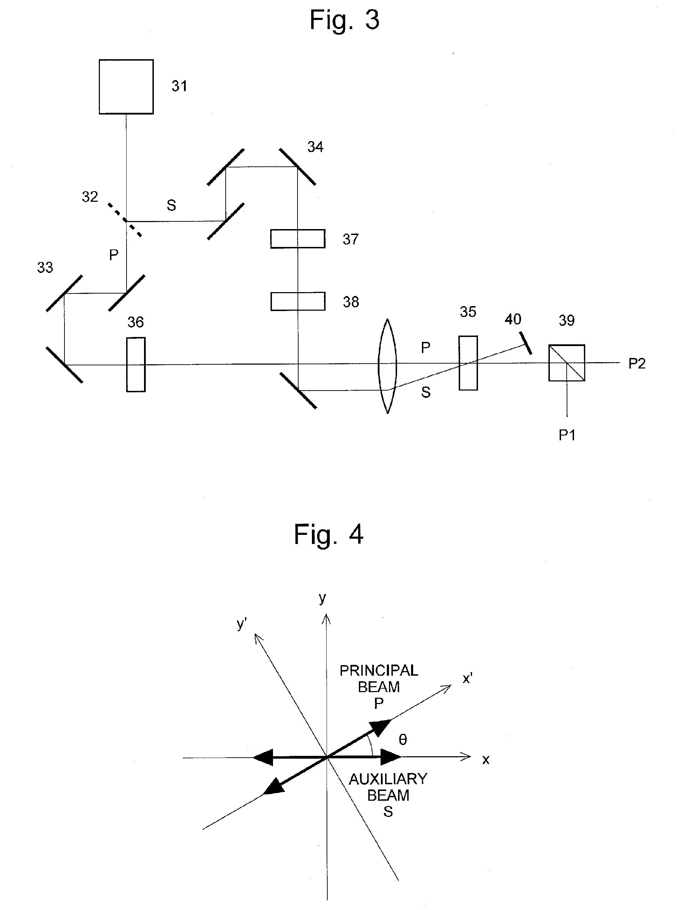

A femtosecond laser beam energy stabilizing apparatus which is an embodiment of the present invention will be described with reference to Figs. 3 through 6. Fig. 3 is an overall configuration diagram of the femtosecond laser beam energy stabilizing apparatus of the present embodiment. A pulsed femtosecond laser beam generated by an optical source 31 is divided into a principal beam P and an auxiliary beam S by a beam splitter 32. The divided principal beam P and the auxiliary beam S are made to cross each other in an optical gate element 35 respectively by beam optical elements 33 and 34, which are a mirror and the like. The optical gate element 35 is made of a material that exhibits the optical Kerr effect. Materials having the strong optical Kerr effect include, for example, carbon disulfide, strontium titanate, dense flint glass ($PbO_3$-based SFS1 containing $SiO_2$, $Na_2O$, or $Sb_2O_3$ described in Patent Documents 3 and 4), and bismuth glass ($Bi_2O_3$-$B_2O_3$-$SiO_2$ glass described in Non-Patent Document 3). Among these, carbon disulfide is liquid and therefore should be kept in a glass container.

The principal beam P and the auxiliary beam S divided by the beam splitter 32 are converted into beams linearly polarized in the same direction by polarizers 36 and 37, respectively. Further, the polarization direction of the auxiliary beam S is rotated by an angle $\theta$ by a polarization direction change element 38. Consequently, the polarization direction of the principal beam P and that of the auxiliary beam S differ by the angle $\theta$.

After passing through the optical gate element 35, the principal beam P is separated into a parallel component light P1 and a perpendicular component light P2 by a polarization beam splitter 39. The polarization direction of the parallel component light P1 is the same as that of the principal beam P before passing through the optical gate element 35. The polarization direction of the perpendicular component light P2 is perpendicular to that of the parallel component light P1. In the example of Fig. 3, at the polarization beam splitter 39, the perpendicular component light P2 travels straight and the parallel component light P1 is reflected. However, their travelling directions may be the other way around. Since the auxiliary beam S will no longer be used after passing through the optical gate element 35, it is stopped (absorbed) by a stopper 40.

The relationship between the principal beam P and the auxiliary beam S at the optical gate element 35 is described with reference to Fig. 4. Let an electric field of the principal beam P before entering the optical gate element 35 be expressed as follows:

$$E_{p,before} = E_0 \cdot \cos(\tau) \ldots (1),$$

where Eo denotes the amplitude (of the electric field) of the principal beam P, and $\cos(\tau)$ denotes how the electric field vibrates spatially and temporally. To be accurate, $\cos(\tau)$ is $\cos(k \cdot r - \omega t - \Phi)$, where k denotes the wave number vector of the light, $r$ denotes the space coordinate, $\omega$ denotes the angular frequency of the light, $t$ denotes time, and $\Phi$ denotes the initial phase (a constant).

The x, y components of the principal beam P are:

$$E_{p,before,x} = \cos\theta \cdot E_0 \cdot \cos(\tau) \ldots (2)$$

and

$$E_{p,before,y} = \sin\theta \cdot E_0 \cdot \cos(\tau) \ldots (3),$$

respectively.

The optical gate element 35 exhibits the optical Kerr effect, and therefore the auxiliary beam S changes its refractive index in the polarization direction (the direction of the electric field). Hence, when the principal beam P passes through the optical gate element 35, the phase is changed only in the x-direction. Let the amount of this change be $\Delta$. Then,

$$E_{p,after,x} = \cos\theta \cdot E_0 \cdot \cos(\tau+\Delta) \ldots (4),$$

and

$$E_{p,after,y} = E_{p,before,y} = \sin\theta \cdot E_0 \cdot \cos(\tau) \ldots (5).$$

The value $\Delta$ is a product of the light intensity and a constant which depends on the material and thickness of the optical gate element 35 and on the light wavelength and other factors.

The equations (4) and (5) are converted into x'-direction and y'-direction to compute their amplitude as follows:

$$E_{p,after,x'} = \cos\theta \cdot \cos\theta \cdot E_0 \cdot \cos(\tau+\Delta) + \sin\theta \cdot \sin\theta \cdot E_0 \cdot \cos(\tau) \ldots (6);$$

and

$$E_{p,after,y'} = \sin\theta\cdot\cos\theta\cdot E_0\cdot\cos(\tau+\Delta) + \cos\theta\cdot\sin\theta\cdot E_0\cdot\cos(\tau) \dots (7).$$

In both equations (6) and (7), the first term of the right-hand side relates to the x-direction and the second term to the y-direction.

The electric field in the vibration direction (x'-direction) of the electric field of the "light to be stabilized" is computed as follows. In this approach, in order to compute the amplitude of the electric field, the equation is first divided into the terms of $\cos(\tau)$ and $\sin(\tau)$, and then a trigonometric formula is used. Since $\cos(\tau+\Delta) = \cos(\tau)\cdot\cos(\Delta) - \sin(\tau)\cdot\sin(\Delta)$ holds,

$$E_{p,after,x'} = E_0\cdot\cos^2\theta\{\cos(\tau)\cdot\cos(\Delta) - \sin(\tau)\cdot\sin(\Delta)\} + E_0\cdot\sin^2\theta\cdot\cos(\tau)$$

$$= E_0\cdot\cos(\tau)\{\cos^2\theta\cdot\cos(\Delta) + \sin^2\theta\} - E_0\cdot\sin(\tau)\{\cos^2\theta\cdot\sin(\Delta)\}$$

$$= E_0\sqrt{[\cos^4\theta\cdot\cos^2(\Delta) + 2\cos^2\theta\cdot\cos(\Delta)\cdot\sin^2\theta + \sin^4\theta + \cos^4\theta\cdot\sin^2(\Delta)]}\cdot\cos(\tau+A)$$

$$= E_0\sqrt{[\cos^4\theta + 2\cos^2\theta\cdot\sin^2\theta\cdot\cos(\Delta) + \sin^4\theta]}\cdot\cos(\tau+A) \dots (8).$$

Considering the fact that the intensity of light is in proportion to the square of the amplitude, the equation (8) shows that the intensity of the original light is multiplied by

$$R = \cos^4\theta + 2\cos^2\theta\cdot\sin^2\theta\cdot\cos(\Delta) + \sin^4\theta \dots (9).$$

To simplify the equation (8), the equation $\cos(\Delta) = 1 - 2\sin^2(\Delta/2)$ is used. Then,

$$R = \cos^4\theta + 2\cos^2\theta\cdot\sin^2\theta(1 - 2\sin^2(\Delta/2)) + \sin^4\theta$$

$$= \cos^4\theta + 2\cos^2\theta\cdot\sin^2\theta + \sin^4\theta - 4\cos^2\theta\cdot\sin^2\theta\cdot\sin^2(\Delta/2)$$

$$= 1 - \sin^2(2\theta)\cdot\sin^2(\Delta/2) \dots (10).$$

Equation (10) shows that the value of R depends on the values of $\theta$ and $\Delta$. As described above, the value $\Delta$ is a product of the light intensity and a constant which depends on the material of the optical gate element and other factors. Therefore, the value $\Delta$ increases as the energy of pulses increases. According to the equation (10), the degree of influence of the value $\Delta$ on R varies depending on the value of $\theta$, which has a maximum influence of $\theta=45°$.

In light of this, the auxiliary beam S is rotated by 45 degrees with respect to the principal beam P by the polarization direction change element 38, and then is injected into the optical gate element 35. The auxiliary beam S changes, by the optical Kerr effect, the refractive index of the optical gate element 35 only in the direction of its electric field. This changes the polarization state of the principal beam P which passes through the optical gate element 35 to an elliptical polarization. The degree of this change increases as the intensity of the auxiliary beam S increases (i.e. as the intensity of the principal beam P increases).

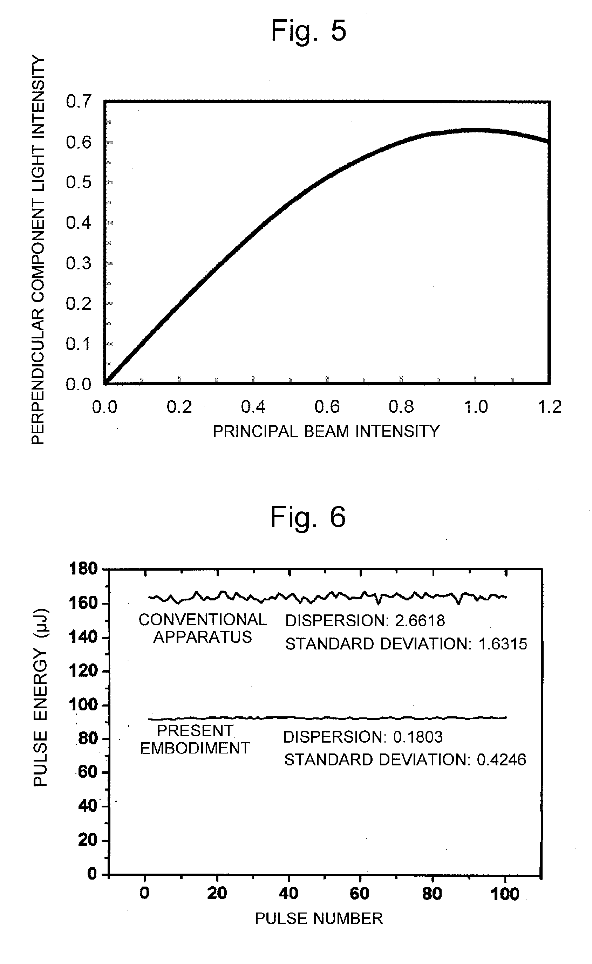

The principal beam P which has passed through the optical gate element 35 is separated into the parallel component light P1 and the perpendicular component light P2 by the polarization beam splitter 39. The intensity of the perpendicular component light P2 increases as the intensity of the auxiliary beam S increases. The intensity of the perpendicular component light P2 is a product of the original intensity of the principal beam P and the aforementioned value R. Taking into consideration that the intensity of the principal beam P is in proportion to that of the auxiliary beam S, a computation shows that the intensity of the perpendicular component light P2 is saturated at a certain point as shown in Fig. 5. In the example of Fig. 5, the intensity of the principal beam which maximizes the intensity of the perpendicular component light P2 is normalized as 1. In the vicinity of the saturation point, the intensity of the perpendicular component light P2 changes very insensitively to the intensity change of the principal beam P; in particular, when the intensity of the principal beam P changes by ±5%, the intensity of the perpendicular component light P2 changes by as small as ±0.3% or less.

Fig. 6 shows the result of an actual measurement of the intensity of femtosecond laser pulses using the aforementioned apparatus. The laser generator used was "Spitfire" (registered trademark) which is a product of Spectra-Physics and is installed at the University of Tokushima. A total of 100 shots of pulses in which the duration of a pulse is approximately 130 fs were generated and the energy of each shot was measured. In the case where the apparatus of the present embodiment was not used (the upper line), the standard deviation of the energy of 100 shots of laser pulses was 1.6315. In contrast, with the apparatus of the present embodiment, the standard deviation was 0.4246. That is, the variation of the energy was decreased to approximately one-fourth of the conventional case.

As described above, the general technical idea of the laser beam energy stabilizing apparatus according to the present invention is that a laser beam is first divided into a principal beam and an auxiliary beam, and an optical functional element is altered by the auxiliary beam, thereby controlling the principal beam which passes through the optical functional element. Hereinafter, two practical examples, which are different from the above-described embodiment, using this principle will now be described.

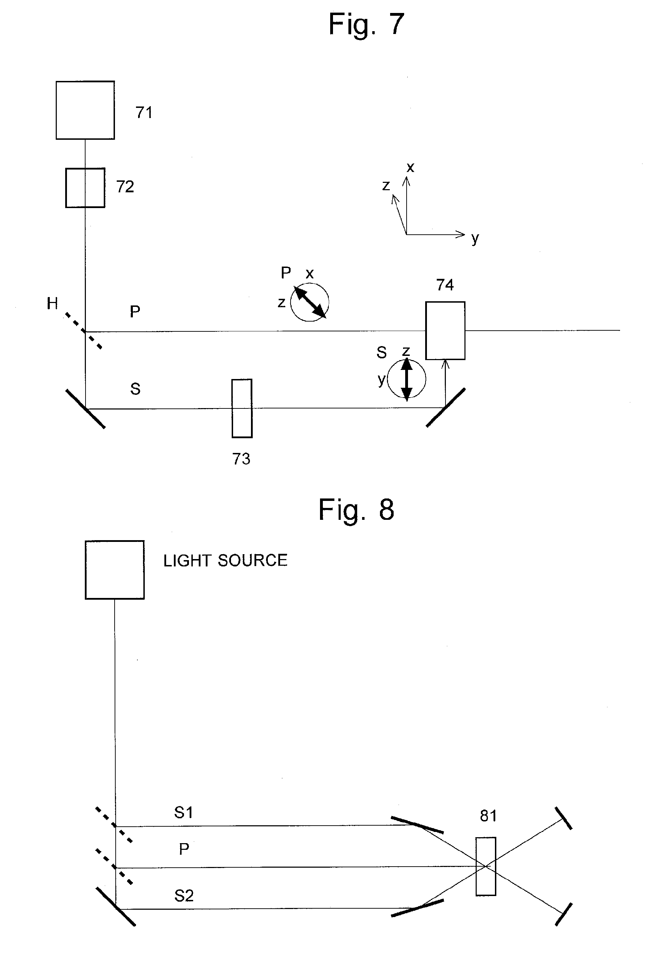

The first practical example is shown in Fig. 7. The laser beam generated in a light source 71 or another unit is divided into a principal beam P and an auxiliary beam S. Then, the auxiliary beam S is injected into an optical gate element 72 which has the optical Kerr effect perpendicularly to the principal beam P. As in the aforementioned embodiment, both the principal beam P and the auxiliary beam S are linearly polarized before or after the beam division. The polarization direction (the vibration direction of the electric field) of the auxiliary beam S at the point in time when the auxiliary beam S enters the optical gate element 72 is set at z-direction by a polarization direction change element 73. The principal beam P which passes through the optical gate element 72 is affected by the optical Kerr effect. The influence is significant particularly when the polarization direction of the principal beam P is inclined at 45 degrees with respect to the z-direction. This stabilizes the intensity of the principal beam P as in the aforementioned embodiment.

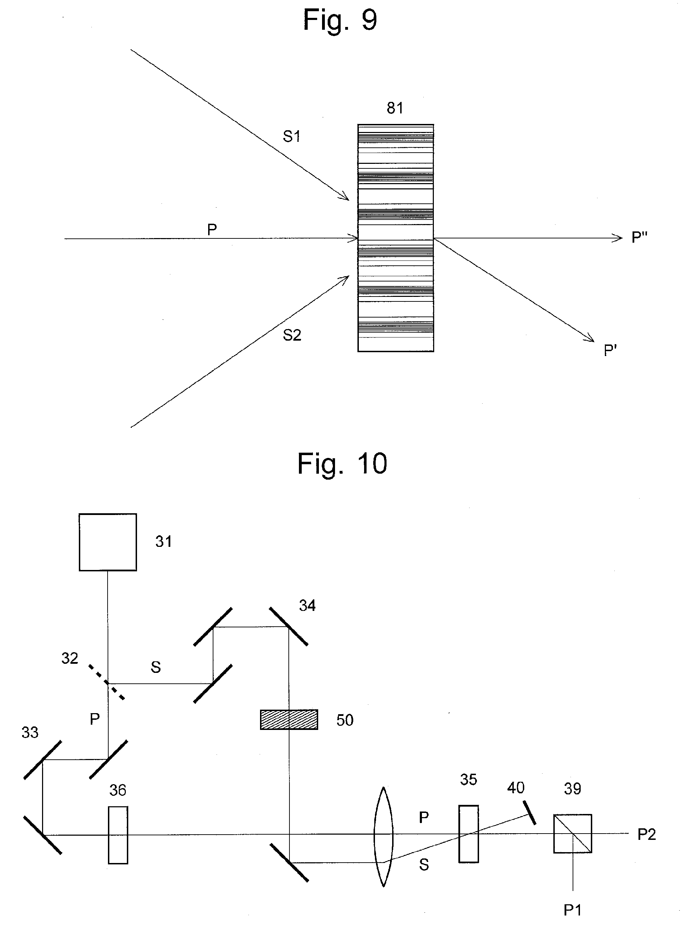

The second practical example is shown in Fig. 8. In this embodiment, a laser beam is divided into three beams: a linearly-polarized principal beam P and two auxiliary beams S1 and S2. Two auxiliary beams S1 and S2 are injected into an optical gate element 81 so that they cross each other, where they interfere with each other. The optical gate element 81 is made of a substance which exhibits the significant optical Kerr effect (e.g. carbon disulfide). As a result of the interference, an interference pattern is formed in the optical gate element 81 (Fig. 9). The principal beam P is injected into, at a predetermined angle, the optical gate element 81 in which the interference pattern is formed. Consequently, a portion of the principal beam P is diffracted. The proportion of the diffracted light P' in the principal beam P increases as the interference pattern becomes stronger, i.e. as the auxiliary beams S1 and S2 become more intense. Therefore, the proportion of the light P" which travels straight without being diffracted increases as the auxiliary beams S1 and S2 become more intense. This means that also with this configuration, it is possible to stabilize the intensity of the light P", which is a portion of the principal beam P and travels straight without being diffracted. This practical example is an application of a transient grating method (refer to Non-Patent Document 2) to the method according to the present invention.

It should be noted that any of the previous embodiments is a mere example and can be appropriately changed or modified within the spirit of the present invention.
In the embodiment described with reference to Fig. 3, the laser beam from the light source 31 is divided into the principal beam P and the auxiliary beam S by the beam splitter 32. Then, the principal beam P and the auxiliary beam S are converted into beams which are linearly polarized in the same direction by the polarizers 36 and 37, respectively. After that, the polarization direction of the auxiliary beam S is rotated by the angle θ by the polarization direction change element 38. However, other configurations may be used. For example, as in the example of Fig. 7, the laser beam may be first converted into a linearly-polarized beam by the polarizer 72 and then it may be divided into the principal beam P and the auxiliary beam S. Alternatively, in the case where the laser beam is divided into the principal beam P and the auxiliary beam S and then they are converted into linearly-polarized beams, the polarization directions of the principal beam P and the auxiliary beam S may differ to a certain extent in the conversion process into the linearly-polarized beams (Fig. 10). In the apparatus shown in Fig. 10, the polarizer 37 and the polarization direction change element 38 in the apparatus shown in Fig. 3 are changed to a polarization direction complex change element 50. In this case, there is no need to use a polarization direction change element. Further, when the incident laser beam is a linearly-polarized beam, there is no need to use a polarizer.

In the description of the aforementioned embodiment, the energy of the principal beam P is stabilized in the following manner: after the principal beam P has passed through the polarization beam splitter 39, the parallel component light P1 is taken out whose polarization direction is the same as that of the principal beam P before passing through the optical gate element 35. However, it is possible to make use of the perpendicular component light P2 whose polarization direction is different from that of the principal beam P before passing through the optical gate element 35. The intensity change of the perpendicular component light P2 corresponds to the amplified intensity change of the laser beam from the light source. Therefore, the perpendicular component light P2 may be used for monitoring the intensity change of the laser beam, for example.

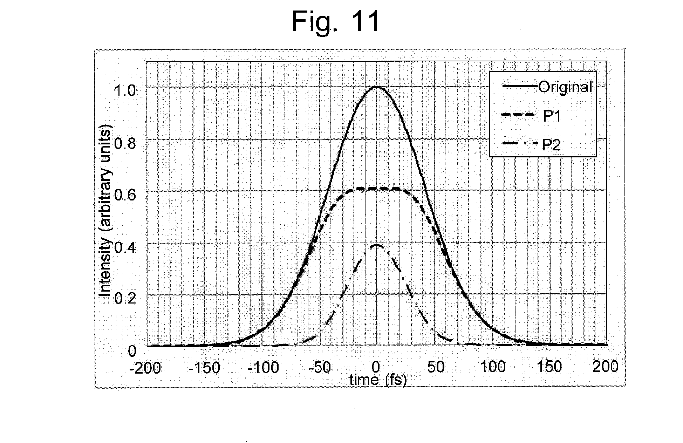

In the apparatus described with reference to Fig. 3, in which the optical path lengths of the principal beam and the auxiliary beam are the same, the optical gate element may be made of strontium titanate, dense flint glass (SFS1), or bismuth glass (e.g. $Bi_2O_3$-$B_2O_3$-$SiO_2$ glass). These materials respond sufficiently faster than the pulse width of the pulses of pulse lasers. In this case, the apparatus may be used for changing the temporal waveform of pulses in addition to stabilizing laser light as described above. Fig. 11 shows a computation result of an injection of a principal beam into a rapidly-responsive optical gate element. In this example, the principal beam had a Gaussian temporal waveform I(t) and a full width at half maximum $\tau$ was 100fs.

The result shown in Fig. 11 was obtained by the computation in the following manner.

First, the temporal waveform I(t) of the Gaussian principal beam was defined as follows:

$$I(t)=I_0 exp \times \{-4(ln2)t^2/\tau^2$$

Next, the intensity $I_{P1}(t)$ of the principal beam after passing through a polarization beam splitter (i.e. the beam having the same polarization direction as that of the principal beam before passing through the optical gate element) was computed from the following equation:

$$I_{P1}(t)=I(t)\times[1-sin^2(2\theta)sin^2\{kI(t-t')/2\}],$$

where $\theta$ denotes the difference between the polarization direction of the principal beam and that of the auxiliary beam, $k$ denotes a constant showing the intensity of the optical Kerr effect, and t' denotes the time difference of the arrivals of the principal beam and the auxiliary beam at the optical gate element. In this case, $\theta$ was set to be 45 degrees and t' was set to be 0.

In this manner, the pulse temporal waveform of the light component light (parallel component light) P1 having the polarization direction of that of the beam before passing through the optical gate element 35 can be changed so as to be a pulse (top-hat-shaped pulse) that has a constant intensity for approximately 50 fs.

The laser beam energy stabilizing apparatus according to the present invention can be applied in a variety of fields.

For example, in the field of laser communication, the stabilization of the energy of laser light has been performed by monitoring the intensity of a laser light using a photo diode and adjusting a current circuit. In contrast, since the laser beam energy stabilizing apparatus according to the present invention does not involve a feedback mechanism, the stabilization of a laser beam (the stabilization of the change at high frequencies) can be performed more quickly than in the previous systems. This realizes a more stable laser communication than ever before.

In a MALDI-MS system, for example, fragile biological samples are ionized. Therefore, if the energy of a laser emitted is unstable, the samples are always ionized under different conditions. Hence, a MALDI-MS system requires a light source which can generate a stable pulse light as well as change the energy thereof. The laser beam energy stabilizing apparatus according to the present invention may be preferably used as such a light source.

Femtosecond lasers are also used for a microfabrication of a variety of materials. The laser beam energy stabilizing apparatus according to the present invention may be used in such a laser processing field in order to process materials more accurately than ever before.

In addition, the laser beam energy stabilizing apparatus according to the present invention may be used as a light source of a laser microscope or the like in order to perform imaging or the like more accurately than ever before. A photoacoustic imaging, which uses the photoacoustic effect is one of such imaging techniques. In a photoacoustic imaging, a short pulse laser light is emitted onto a body tissue so as to momentarily thermally-expand the body tissue to generate an ultrasonic wave. Photoacoustic imaging has attracted attention as a method capable of making a diagnosis of a deep portion of a body tissue in a high spatial resolution by taking advantage of a high spatial resolution of light and a long-distance propagation characteristics of sound in a body tissue. If the laser beam energy stabilizing apparatus according to the present invention is used as a light source of a photoacoustic imaging system, the depth of a tissue to be examined by emitting a laser light with a stable intensity onto the tissue can be adjusted with high accuracy.

EXPLANATION OF NUMERALS

| | |
|---|---|
| 11, 31, 71 ... | Light Source |
| 12, 32 ... | Beam Splitter |
| 13 ... | Mirror |
| 14, 74, 81 ... | Optical Gate Element |
| 15, 36, 37, 72 ... | Polarizer |
| 16, 73 ... | Polarization Direction Change Element |
| 17 ... | Polarization Filter |
| 33, 34 ... | Beam Optical System |
| 35 ... | Optical Gate Element |
| 38 ... | Polarization Direction Change Element |
| 39 ... | Polarization Beam Splitter |
| 40 ... | Stopper |
| 50 ... | Polarization Direction Complex Change Element |

**Claims**

1. A laser beam control apparatus, comprising:

   a) a beam optical system for dividing a linearly-polarized incident laser beam into a principal beam and an auxiliary beam and then for crossing the principal beam and the auxiliary beam;
   b) a polarization direction change element for changing a polarization direction of either one or both of the principal beam and the auxiliary beam;
   c) an optical gate element provided at an intersection of the principal beam and the auxiliary beam and made of a material that exhibits an optical Kerr effect; and
   d) a polarization filter for taking out from the principal beam which has passed through the optical gate element only a beam polarized in a predetermined direction.

2. A laser beam control apparatus, comprising:

   a) an incident beam convertor for converting an incident laser beam into a linearly-polarized beam;
   b) a beam optical system for dividing the incident laser beam which has been converted into a linearly-polarized beam into a principal beam and an auxiliary beam and then for crossing the principal beam and the auxiliary beam;
   c) a polarization direction change element for changing a polarization direction of either one or both of the principal beam and the auxiliary beam;
   d) an optical gate element provided at an intersection of the principal beam and the auxiliary beam and made of a material that exhibits an optical Kerr effect; and
   e) a polarization filter for taking out from the principal beam which has passed through the optical gate element only a beam polarized in a predetermined direction.

3. A laser beam control apparatus, comprising:

   a) a beam optical system for dividing an incident laser beam into a principal beam and an auxiliary beam and then for crossing the principal beam and the auxiliary beam;
   b) a linear polarizer for converting the principal beam and the auxiliary beam into beams linearly polarized in a same direction;
   c) a polarization direction change element for changing a polarization direction of either one or both of the principal beam and the auxiliary beam;
   d) an optical gate element provided at an intersection of the principal beam and the auxiliary beam and made of a material that exhibits an optical Kerr effect; and
   e) a polarization filter for taking out from the principal beam which has passed through the optical gate element only a beam polarized in a predetermined direction.

4. A laser beam control apparatus, comprising:

a) a beam optical system for dividing an incident laser beam into a principal beam and an auxiliary beam and then for crossing the principal beam and the auxiliary beam;

b) a polarization direction complex change element for converting both the principal beam and the auxiliary beam into a linearly-polarized beam so that their polarization directions differ by a predetermined angle;

c) an optical gate element provided at an intersection of the principal beam and the auxiliary beam and made of a material that exhibits an optical Kerr effect; and

d) a polarization filter for taking out from the principal beam which has passed through the optical gate element only a beam polarized in a predetermined direction.

5. The laser beam control apparatus according to any one of claims 1 through 3, wherein:

in the beam optical system, from a point where the incident laser beam is divided into the principal beam and the auxiliary beam to a point where the principal beam and the auxiliary beam cross, an optical path length of the principal beam and that of the auxiliary beam are a same.

6. The laser beam control apparatus according to any one of claims 1 through 3 and 5, wherein:

the predetermined direction is a same direction of the polarization of the principal beam before passing through the optical gate element.

7. The laser beam control apparatus according to any one of claims 1 through 3, 5 and 6, wherein:

the polarization direction change element makes an angle between the polarization directions of the principal beam and the auxiliary beam be 45 degrees.

8. The laser beam control apparatus according to claim 4, wherein:

in the beam optical system, from a point where the incident laser beam is divided into the principal beam and the auxiliary beam to a point where the principal beam and the auxiliary beam cross, an optical path length of the principal beam and that of the auxiliary beam are a same.

9. The laser beam control apparatus according to either claim 4 or 8, wherein:

the predetermined direction is a same direction of the polarization of the principal beam before passing through the optical gate element.

10. The laser beam control apparatus according to any one of claims 4, 8, and 9, wherein:

the polarization direction change element makes an angle between the polarization directions of the principal beam and the auxiliary beam be 45 degrees.

11. The laser beam control apparatus according to any one of claims 1 through 5 and 8, wherein:

the beam optical system injects the principal beam and the auxiliary beam which are perpendicular to each other into the optical gate element.

12. The laser beam control apparatus according to any one of claims 1 through 5 and 8, wherein:

the beam optical system divides the laser beam into a principal beam and two auxiliary beams, and then crosses the principal beam and the two auxiliary beams at one point; and the laser beam control apparatus further comprises:

f) a principal beam incident angle setting unit for setting an incident angle of the principal beam entering into the optical gate element.

13. The laser beam control apparatus according to any one of claims 1 through 12, wherein the optical gate element is made of any one of carbon disulfide, strontium titanate, dense flint glass, and bismuth glass.

**14.** A laser beam energy stabilizing apparatus for stabilizing an energy of a laser beam by using the laser beam control apparatus according to any one of claims 1 through 13.

**15.** A laser beam control method, comprising the steps of:

a) dividing a linearly-polarized incident laser beam into a principal beam and an auxiliary beam;
b) changing a polarization direction of either one or both of the principal beam and the auxiliary beam;
c) crossing the principal beam and the auxiliary beam in an optical gate element made of a material that exhibits an optical Kerr effect; and
d) taking out from the principal beam which has passed through the optical gate element only a beam polarized in a predetermined direction.

**16.** A laser beam control method, comprising the steps of:

a) converting an incident laser beam into a linearly-polarized beam;
b) dividing the incident laser beam which has been converted into a linearly-polarized beam into a principal beam and an auxiliary beam;
c) changing a polarization direction of either one or both of the principal beam and the auxiliary beam;
d) crossing the principal beam and the auxiliary beam in an optical gate element made of a material that exhibits an optical Kerr effect; and
e) taking out from the principal beam which has passed through the optical gate element only a beam polarized in a predetermined direction.

**17.** A laser beam control method, comprising the steps of:

a) converting an incident laser beam into a principal beam and an auxiliary beam;
b) converting the principal beam and the auxiliary beam into a beam linearly-polarized in a same direction;
c) changing a polarization direction of either one or both of the principal beam and the auxiliary beam;
d) crossing the principal beam and the auxiliary beam in an optical gate element made of a material that exhibits an optical Kerr effect; and
e) taking out from the principal beam which has passed through the optical gate element only a beam polarized in a predetermined direction.

**18.** A laser beam control method, comprising the steps of:

a) dividing an incident laser beam into a principal beam and an auxiliary beam;
b) converting both the principal beam and the auxiliary beam into a linearly-polarized beam so that their polarization directions differ by a predetermined angle;
c) crossing the principal beam and the auxiliary beam in an optical gate element made of a material that exhibits an optical Kerr effect;
d) taking out from the principal beam which has passed through the optical gate element only a beam polarized in a predetermined direction.

**19.** The laser beam control method according to any one of claims 15 through 18, wherein:

from a point where the incident laser beam is divided into the principal beam and the auxiliary beam to a point where the principal beam and the auxiliary beam cross, an optical path length of the principal beam and that of the auxiliary beam are a same.

**20.** The laser beam control method according to any one of claims 15 through 19, wherein:

the predetermined direction is a same direction of the polarization of the principal beam before passing through the optical gate element.

**21.** The laser beam control method according to any one of claims 15 through 20, wherein:

an angle between the polarization directions of the principal beam and the auxiliary beam is 45 degrees.

**22.** A laser beam energy stabilizing method for stabilizing an energy of a laser beam by using the laser beam control method according to any one of claims 15 through 21.

# Fig. 1

# Fig. 2A

x-y ISOTOPIC CHANGE

# Fig. 2B

x-y ANISOTOPIC CHANGE

# Fig. 3

# Fig. 4

## Fig. 5

## Fig. 6

# Fig. 7

# Fig. 8

LIGHT SOURCE

# Fig. 9

# Fig. 10

## Fig. 11

<div align="center">

**INTERNATIONAL SEARCH REPORT**

</div>

| | International application No. |
|---|---|
| | PCT/JP2011/070044 |

**A. CLASSIFICATION OF SUBJECT MATTER**
*G02F1/35*(2006.01)i

According to International Patent Classification (IPC) or to both national classification and IPC

**B. FIELDS SEARCHED**

Minimum documentation searched (classification system followed by classification symbols)
G02F1/35

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus(JDreamII), IEEE Xplore

**C. DOCUMENTS CONSIDERED TO BE RELEVANT**

| Category* | Citation of document, with indication, where appropriate, of the relevant passages | Relevant to claim No. |
|---|---|---|
| X | JP 11-024115 A (Hitachi, Ltd.), 29 January 1999 (29.01.1999), paragraphs [0019], [0023], [0026] to [0032], [0073], [0083], [0087], [0088]; fig. 1, 4 (Family: none) | 1-22 |
| A | JP 2007-248962 A (Ricoh Co., Ltd.), 27 September 2007 (27.09.2007), paragraphs [0008], [0009] (Family: none) | 1-22 |
| A | JP 2001-356095 A (Japan Science and Technology Corp.), 26 December 2001 (26.12.2001), claims 3, 4 (Family: none) | 1-22 |

| ☐ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 September, 2011 (16.09.11) | 27 September, 2011 (27.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006303235 A
- US 5828484 A
- JP 2001356095 A
- JP 2004085930 A

**Non-patent literature cited in the description**

- *STABBLER,* 07 September 2010, http://www.fastl-ite.com/en/pag18-STABBLER.html
- **SHIGEKI MATSUO ; TAHEI TAHARA.** Phase-stabilized Optical Heterodyne Detection of Impulsive Stimulated Raman Scattering. *Chemical Physics Letters,* 1997, vol. 264 (6), 636-642
- Photonics Glasses. **NAOKI SUGIMOTO.** Res. Reports Asahi. Glass Co., Ltd, 2007, vol. 57, 75-81